# EUROPEAN PATENT SPECIFICATION

(11) **EP 3 896 775 B1**
(45) Date of publication and mention of the grant of the patent: **21.02.2024**
(21) Application number: 20834573.6
(22) Date of filing: 02.07.2020
(51) Int. Cl.: H01M 10/42, H02J 7/00, H01M 50/211, H01M 50/583

(54) **BATTERY PACK AND POWER STORAGE DEVICE COMPRISING SAME**
BATTERIERACK UND ENERGIESPEICHERVORRICHTUNG DAMIT
BLOC-BATTERIE ET DISPOSITIF DE STOCKAGE D'ÉNERGIE LE COMPRENANT

(30) Priority: 03.07.2019 KR 20190080193
(43) Date of publication of application: 20.10.2021
(73) Proprietor: LG Energy Solution, Ltd., Seoul 07335 (KR)
(72) Inventor: KIM, Song-Gwon, Daejeon 34122 (KR)
(74) Representative: Plasseraud IP
(86) International application number: PCT/KR2020/008692
(87) International publication number: WO 2021/002711

(56) References cited:
- EP-A1- 2 523 246
- EP-A1- 2 874 198
- JP-A- 2011 204 382

## Description

### TECHNICAL FIELD

The present disclosure relates to a battery pack and an energy storage system including the battery rack.

The present application claims priority to Korean Patent Application No. 10-2019-0080193 filed on July 3, 2019 in the Republic of Korea.

### BACKGROUND ART

Secondary batteries which are highly applicable to various products and exhibit superior electrical properties such as high energy density, etc. are commonly used not only in portable devices but also in electric vehicles (EVs) or hybrid electric vehicles (HEVs) driven by electrical power sources. The secondary battery is drawing attentions as a new energy source for enhancing environment friendliness and energy efficiency in that the use of fossil fuels can be reduced greatly and no byproduct is generated during energy consumption. JP2011204381A discloses a battery module with connection members and busbars, EP2874198 discloses a lithium ion monobloc battery assembly.

Secondary batteries widely used at present include lithium ion batteries, lithium polymer batteries, nickel cadmium batteries, nickel hydrogen batteries, nickel zinc batteries and the like. An operating voltage of the unit secondary battery cell, namely a unit battery cell, is about 2.5V to 4.5V. Therefore, if a higher output voltage is required, a plurality of battery cells may be connected in series to configure a battery pack. In addition, depending on the charge/discharge capacity required for the battery pack, a plurality of battery cells may be connected in parallel to configure a battery pack. Thus, the number of battery cells included in the battery pack may be variously set according to the required output voltage or the demanded charge/discharge capacity.

Meanwhile, when a plurality of battery cells are connected in series or in parallel to configure a battery pack, it is common to configure a battery module including at least one battery cell first, and then configure a battery rack by using at least one battery module and adding other components. Here, according to various voltage and capacity requirements, an energy storage system may be configured to include at least one battery rack that includes at least one battery module.

The conventional battery pack is fabricated by constructing an assembly of a plurality of battery modules including at least one battery cell and then connecting the battery modules in series or in parallel to match the voltage of the battery pack to the voltage used by an inverter.

Such a battery pack has various product configurations according to voltage and output specifications, and the various product configurations increase product development costs, resulting in an increase in product prices, which hinders price competitiveness.

Therefore, there is a need to find a way to reduce product development costs and secure price competitiveness through a modular structure compatible with both serial and parallel connections of the battery pack.

### DISCLOSURE

### Technical Problem

Therefore, the present disclosure is directed to providing a battery pack, which includes a connection module that allows both serial and parallel connections to reduce product development costs and secure price competitiveness, and an energy storage system including the battery pack.

In addition, the present disclosure is also directed to providing a battery pack, which may improve convenience in installation, and an energy storage system including the battery pack.

### Technical Solution

The present invention is defined in independent claim 1. Preferred embodiments are as defined in dependent claims 2 to 9. In the present disclosure, there is provided a battery pack comprising: a plurality of battery modules stacked on each other, each battery module having at least one battery cell; a control module stacked together with the plurality of battery modules for protection and power conversion of the plurality of battery modules; and a connection module configured to electrically connect the control module and the plurality of battery modules and integrally mounted to the plurality of battery modules and the control module.

The control module may be provided as a serial connection module for connecting the plurality of battery modules in series or a parallel connection module for connecting the plurality of battery modules in parallel.

The connection module includes a serial connection module connecting unit configured for connection to the serial connection module; and a parallel connection module connecting unit configured for connection to the parallel connection module.

The serial connection module connecting unit and the parallel connection module connecting unit may be provided with different shapes.

The connection module may include a fuse member configured to block an overcurrent so that the plurality of battery modules are protected.

The plurality of battery modules include a positive electrode bus bar and a negative electrode bus bar provided to one side thereof, and the connection module includes a positive electrode bus bar connecting unit and a negative electrode bus bar connecting unit connected to the positive electrode bus bar and the negative electrode bus bar of the plurality of battery modules.

The plurality of battery modules include a communication connector provided to at least one side thereof.

The connection module include a communication connector connecting unit connected to the communication connector of the plurality of battery modules.

The battery cell is provided in plural, and the plurality of battery cells may be provided as pouch-type secondary batteries.

In claim 9 the present invention, there is also provided an energy storage system, which comprises at least one battery pack according to claim 1.

### Advantageous Effects

According to various embodiments as above, it is possible to provide a battery pack, which includes a connection module that allows both serial and parallel connections to reduce product development costs and secure price competitiveness, and an energy storage system including the battery pack.

In addition, according to various embodiments as above, it is possible to provide a battery pack, which may improve convenience in installation, and an energy storage system including the battery pack.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for illustrating a battery pack according to an embodiment of the present disclosure.
FIG. 2 is an exploded perspective view showing the battery pack of FIG. 1.
FIG. 3 is a diagram for illustrating another embodiment of a control module of the battery pack of FIG. 1.
FIG. 4 is a diagram for illustrating a connection module of the battery pack of FIG. 1.
FIG. 5 is a diagram for illustrating serial connection of the connection module of the battery pack of FIG. 1.
FIG. 6 is a diagram for illustrating parallel connection of the connection module of the battery pack of FIG. 1.
FIG. 7 is a diagram for illustrating a connection module according to another embodiment of the battery pack of FIG. 1.
FIG. 8 is a diagram for illustrating a battery pack according to another embodiment of the present disclosure.
FIG. 9 is a diagram for illustrating an energy storage system according to an embodiment of the present disclosure.

### BEST MODE

The present disclosure will become more apparent by describing in detail the embodiments of the present disclosure with reference to the accompanying drawings. It should be understood that the embodiments disclosed herein are illustrative only for better understanding of the present disclosure, and that the present disclosure may be modified in various ways. In addition, for ease understanding of the present disclosure, the accompanying drawings are not drawn to real scale, but the dimensions of some components may be exaggerated.

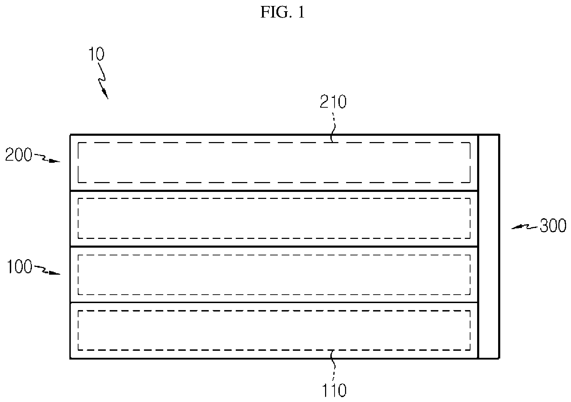

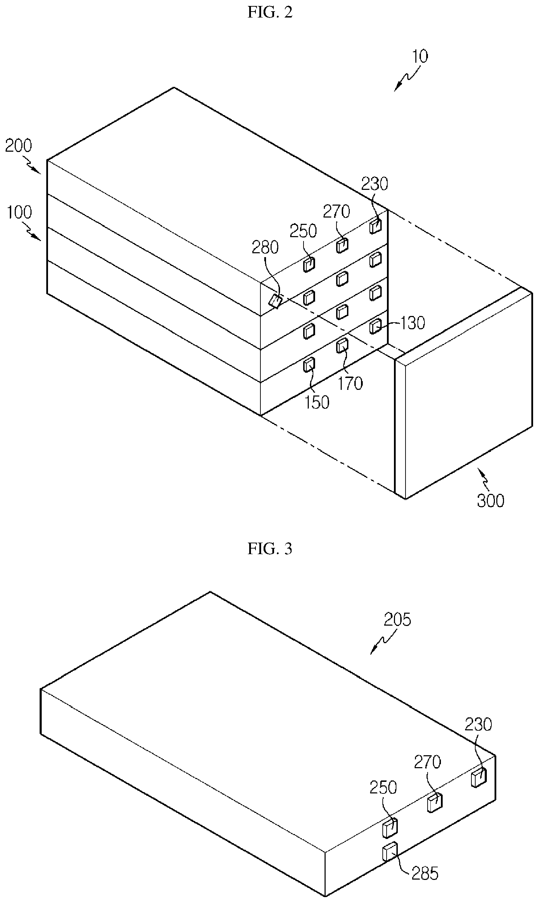

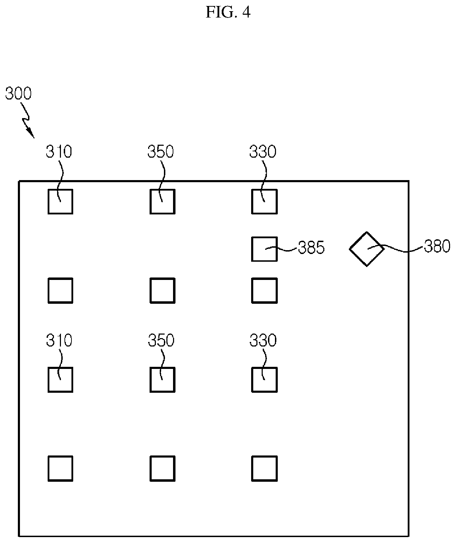

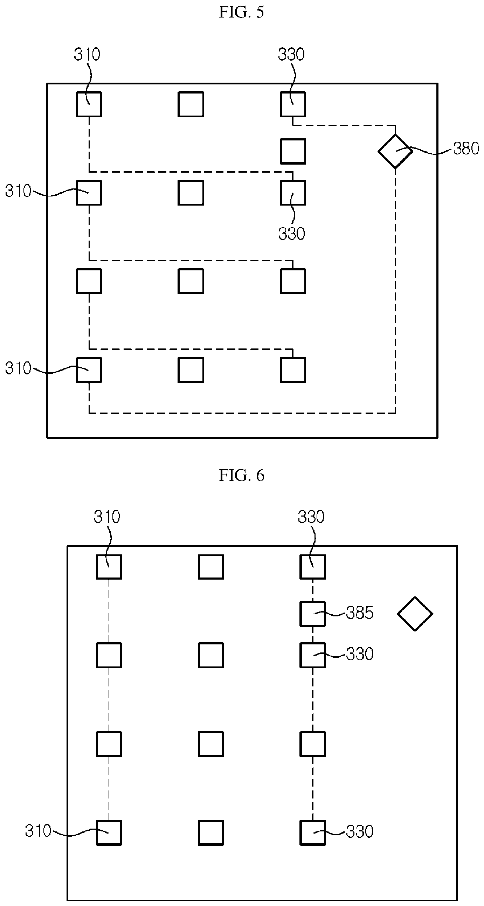

FIG. 1 is a diagram for illustrating a battery pack according to an embodiment of the present disclosure, FIG. 2 is an exploded perspective view showing the battery pack of FIG. 1, FIG. 3 is a diagram for illustrating another embodiment of a control module of the battery pack of FIG. 1, FIG. 4 is a diagram for illustrating a connection module of the battery pack of FIG. 1, FIG. 5 is a diagram for illustrating serial connection of the connection module of the battery pack of FIG. 1, and FIG. 6 is a diagram for illustrating parallel connection of the connection module of the battery pack of FIG. 1.

Referring to FIGS. 1 to 6, a battery pack 10 may include a battery module 100, a control module 200, and a connection module 300.

The battery module 100 may be provided in plural. The plurality of battery modules 100 may be stacked on each other in a vertical or a lateral direction to be electrically connected to each other. The electrical connection between the battery modules may be a serial connection or a parallel connection.

Each of the plurality of battery modules 100 may include a battery cell 110, a positive electrode bus bar 130, a negative electrode bus bar 150, and a communication connector 170.

At least one battery cell 110 or a plurality of battery cells 110 may be provided. Hereinafter, in this embodiment, it will be described that a plurality of battery cells 110 are provided.

The plurality of battery cells 110 may be provided as secondary batteries. Specifically, the plurality of battery cells 110 may be provided as at least one of pouch-type secondary batteries, rectangular secondary batteries, and cylindrical secondary batteries. Hereinafter, in this embodiment, it will be described that the plurality of battery cells 110 are pouch-type secondary batteries.

The positive electrode bus bar 130 is provided to at least one side of the battery module 100 and may be electrically connected to the plurality of battery cells 110. The positive electrode bus bar 130 is provided to protrude on at least one side of the battery module 100 or to be buried concave therein, and may be electrically connected to the connection module 300, explained later.

The negative electrode bus bar 150 may be provided to at least one side of the battery module 100 to be spaced apart by a predetermined distance from the positive electrode bus bar 150, and may be electrically connected to the plurality of battery cells 110. The negative electrode bus bar 150 may be provided to protrude on at least one side of the battery module 100 or to be buried concave therein, and may be electrically connected to the connection module 300, explained later.

The communication connector 170 is provided to at least one side of the battery module 100 to measure a voltage of the battery module 100 and communicate with the battery module 100, and may be electrically connected to the control module 200, explained later.

The control module 200 is used for control, protection and power conversion of the plurality of battery modules 100, and may be stacked together with the battery modules 100 on one side of the stacked battery modules 100.

The control module 200 may be provided as a serial connection module for connecting the plurality of battery modules 100 in series or a parallel connection module for connecting the plurality of battery modules 100 in parallel.

The control module 200 may include a control unit 210, a positive electrode bus bar 230, a negative electrode bus bar 250, a communication connector 270, and a connection module connecting unit 280.

The control unit 210 is provided inside the control module 200, and may include various electronic components for control, protection and power conversion of the battery modules 100.

The positive electrode bus bar 230 is electrically connected to the control unit 210, and may be provided to at least one side of the control module 200. The positive electrode bus bar 230 is provided to protrude on at least one side of the control module 200 or to be buried concave therein, and may be electrically connected to the connection module 300, explained later.

The negative electrode bus bar 250 is electrically connected to the control unit 210 to be spaced apart by a predetermined distance from the positive electrode bus bar 230, and may be provided to at least one side of the control module 200. The negative electrode bus bar 250 is provided to protrude on at least one side of the control module 200 or to be buried concave therein, and may be electrically connected to the connection module 300, explained later.

The communication connector 270 is electrically connected to the control unit 210 and is provided to at least one side of the control module 200, and may be electrically connected to the battery modules 100 through the connection module 300, explained later.

The connection module connecting unit 280 is for serial connection or parallel connection, and may be provided to one side of the control module 200. In this embodiment, the connection module connecting unit 280 may be provided for serial connection. As shown in FIG. 4, in the case of parallel connection, a connection module connecting unit 285 may be provided to the control module 200 differently from the connection module connecting unit 280.

That is, the control module 200 may be provided as a serial connection module for connecting the plurality of battery modules 100 in series or a parallel connection module for connecting the plurality of battery modules 100 in parallel. To this end, the control module 200 may include different connection module connecting units 280, 285 according to the serial connection module or the parallel connection module. That is, the control module 200 may be individually configured as a module for serial connection or parallel connection.

The connection module 300 electrically connects the control module 200 and the plurality of battery modules 100, and may be integrally mounted to the plurality of battery modules 100 and the control module 200.

The connection module 300 may connect the control module 200 and the plurality of battery modules 100 to each other in series or in parallel, and a control unit to which a separate key code for distinguishing the serial and parallel connections and distinguishing the control module 200 is reflected may be provided.

The connection module 300 may include a positive electrode bus bar connecting unit 310, a negative electrode bus bar connecting unit 330, a communication connector connecting unit 350, a serial connection module connecting unit 380, and a parallel connection module connecting unit 385.

The positive electrode bus bar connecting unit 310 is connected to the positive electrode bus bar 130 of the plurality of battery modules 100 and the positive electrode bus bar 230 of the control module 200, and may be provided in a number corresponding to the number of the positive electrode bus bar 130 of the plurality of battery modules 100 and the positive electrode bus bar 230 of the control module 200.

The negative electrode bus bar connecting unit 330 is connected to the negative electrode bus bar 150 of the plurality of battery modules 100 and the negative electrode bus bar 250 of the control module 200, and may be provided in a number corresponding to the number of the negative electrode bus bar 150 of the plurality of battery modules 100 and the negative electrode bus bar 250 of the control module 200.

The communication connector connecting unit 350 is connected to the communication connector 170 of the plurality of battery modules 100 and the communication connector 270 of the control module 200, and may be provided in a number corresponding to the number of the communication connector 170 of the plurality of battery modules 100 and the communication connector 270 of the control module 200.

The serial connection module connecting unit 380 is for connection with the control module 200 provided as the serial connection module, and may be connected to the connection module connecting unit 280 of the control module 200.

If the serial connection module connecting unit 380 is connected to the connection module connecting unit 280 of the control module 200, the connection module 300 may connect the plurality of battery modules 100 and the control module 200 to each other in series, as shown in FIG. 5.

The parallel connection module connecting unit 385 is for connection with the control module 200 provided as the parallel connection module, and may be connected to the connection module connecting unit 285 of the control module 200.

If the parallel connection module connecting unit 385 is connected to the connection module connecting unit 285 of the control module 200, the connection module 300 may connect the plurality of battery modules 100 and the control module 200 to each other in parallel, as shown in FIG. 6.

Meanwhile, the parallel connection module connecting unit 385 and the serial connection module connecting unit 380 have different shapes or arrangements to prevent problems such as erroneous assembly when connecting with the control module 200 according to the serial connection module or the parallel connection module.

As described above, the battery pack 10 according to this embodiment may be manufactured in the form of a module in which the plurality of battery modules 100 and the connection module 300 are standardized into a certain unit by using the integrated connection module 300.

Accordingly, the battery pack 10 according to this embodiment may implement a product configuration more diversely and easily according to voltage and output specifications by using the connection module 300 allowing integrated serial and parallel connections and adjusting to the number of the plurality of standardized battery modules 100.

Here, the plurality of battery modules 100 may be connected to the connection module 300 as being stacked vertically or laterally, thereby significantly improving the convenience in installation of the battery pack 10.

Therefore, the battery pack 10 according to this embodiment may reduce product development costs, secure price competitiveness, and significantly improve installation convenience.

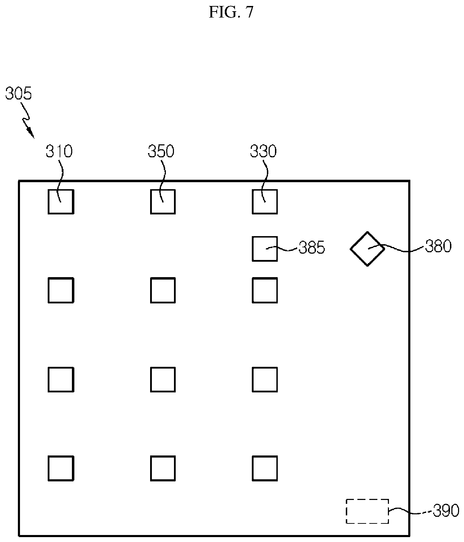

FIG. 7 is a diagram for illustrating a connection module according to another embodiment of the battery pack of FIG. 1.

Since a connection module 305 of this embodiment is similar to the connection module 300 of the former embodiment, features substantially identical or similar to those of the former embodiment will not be described again, and hereinafter, features different from the former embodiment will be described in detail.

Referring to FIG. 7, the connection module 305 may include a positive electrode bus bar connecting unit 310, a negative electrode bus bar connecting unit 330, a communication connector connecting unit 350, a serial connection module connecting unit 380, a parallel connection module connecting unit 385 and a fuse member 390.

The positive electrode bus bar connecting unit 310, the negative electrode bus bar connecting unit 330, the communication connector connecting unit 350, the serial connection module connecting unit 380 and the parallel connection module connecting unit 385 are substantially identical or similar to those of the former embodiment, and thus will not be described again.

The fuse member 390 is provided inside the connection module 305. When an abnormal situation occurs due to overvoltage or overcurrent between the plurality of battery modules 100, the fuse member 390 may disconnect the electrical connection between the plurality of battery modules 100 in order to protect the plurality of battery modules 100.

As described above, in this embodiment, by using the fuse member 390 of the connection module 305, when an abnormal situation occurs due to overvoltage or overcurrent between the battery modules 100, it is possible to effectively block a risk that the abnormal situation may lead to an explosion of the battery pack 10 or the like.

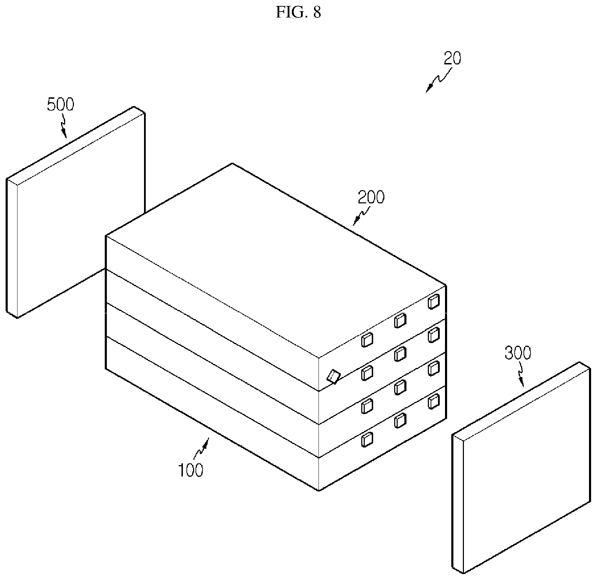

FIG. 8 is a diagram for illustrating a battery pack according to another embodiment of the present disclosure.

Since a battery pack 20 of this embodiment is similar to the battery pack 10 of the former embodiment, features substantially identical or similar to those of the former embodiment will not be described again, and hereinafter, features different from the former embodiment will be described in detail.

Referring to FIG. 8, the battery pack 20 may include a battery module 100, a control module 200, a connection module 300, and a protection plate 500.

The battery module 100, the control module 200 and the connection module 300 are substantially identical or similar to those of the former embodiment, and thus will not be described again.

The protection plate 500 may cover one side of the plurality of battery modules 100 and the control module 200 at a side opposite to the connection module 300. The protection plate 500 may be provided in a pair to cover the connection module 300 as well.

The protection plate 500 may be made of a material with predetermined rigidity, and may protect the plurality of battery modules 100 and the control module 200 from external vibration or shock.

As described above, the battery pack 20 according to this embodiment may effectively protect the plurality of battery modules 100 and the control module 200 from external vibrations or shocks by means of the protection plate 500.

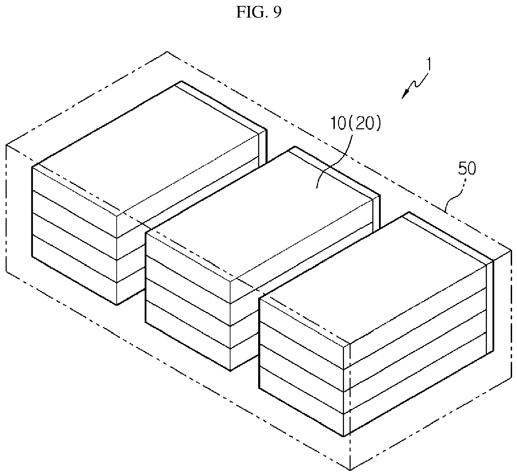

FIG. 9 is a diagram for illustrating an energy storage system according to an embodiment of the present disclosure.

Referring to FIG. 9, an energy storage system 1 may be used as an energy source for home or industrial use. The energy storage system 1 may include at least one battery pack 10, 20 of the former embodiment, or a plurality of battery packs 10, 20 in this embodiment, and a container 50 for accommodating the plurality of battery packs 10, 20.

Since the energy storage system 1 according to this embodiment includes the battery pack 10, 20 of the former embodiment, the energy storage system 1 having all advantages of the battery pack 10, 20 of the former embodiment may be provided.

According to various embodiments as above, it is possible to provide the battery pack 10, 20, which includes the connection module 300, 305 that allows both serial and parallel connections to reduce product development costs and secure price competitiveness, and the energy storage system 1 including the battery pack.

In addition, according to various embodiments as above, it is possible to provide the battery pack 10, 20, which may improve convenience in installation, and the energy storage system 1 including the battery pack.

While the embodiments of the present disclosure have been shown and described, it should be understood that the present disclosure is not limited to the specific embodiments described, and that various changes and modifications can be made within the scope of the present claims.

## Claims

1. A battery pack (10), comprising:
a plurality of battery modules (100) stacked on each other, each battery module (100) having at least one battery cell (110);
a positive electrode bus bar (130);
a negative electrode bus bar (150); and
a communication connector (170),
all provided at the same sides of the battery modules (100);
a control module (200) stacked together with the plurality of battery modules (100), including
a control unit (210) inside the control module (200);
a positive electrode bus bar (230);
a negative electrode bus bar (250);
a communication connector (270); and
a connection module connecting unit (280),
all provided at the same sides of the control module (200) and of the battery modules (100), and
a connection module (300) configured to electrically connect the control module (200) and the plurality of battery modules (100) and integrally mounted to the plurality of battery modules (100) and the control module (200), including
a positive electrode bus bar connecting unit (310),
a negative electrode bus bar connecting unit (330),
a communication connector connecting unit (350),
a serial connection module connecting unit (380), and
a parallel connection module connecting unit (385),
wherein the battery pack (10) is manufactured in the form of a module in which the plurality of battery modules (100) and the connection module (300) are standardized into a certain unit by using the integrated connection module (300).

2. The battery pack (10) according to claim 1,
wherein the control module (200) is provided as a serial connection module for connecting the plurality of battery modules (100) in series or as a parallel connection module for connecting the plurality of battery modules (100) in parallel.

3. The battery pack (10) according to claim 2,
wherein the serial connection module connecting unit (380) is configured for connection to the serial connection module; and
the parallel connection module connecting unit (385) is configured for connection to the parallel connection module.

4. The battery pack (10) according to claim 3,
wherein the serial connection module connecting unit (380) and the parallel connection module connecting unit (385) are provided with different shapes in order to prevent erroneous assembly when connecting with the control module (200) according to the serial connection module or the parallel connection module.

5. The battery pack (10) according to claim 1,
wherein the connection module (300) includes a fuse member (390) configured to block an overcurrent so that the plurality of battery modules (100) are protected.

6. The battery pack (10) according to claim 1,
wherein the plurality of battery modules (100) include a communication connector (170) provided to at least one side thereof, the communication connector (170) being designed to measure a voltage of the battery module (100) and to communicate with the battery module (100) and being electrically connected to the control module (200).

7. The battery pack (10) according to claim 6,
wherein the communication connector connecting unit (350) is connected to the communication connector (170) of the plurality of battery modules (100).

8. The battery pack (10) according to claim 1,
wherein a plurality of battery cells (110) is provided, and
the plurality of battery cells (110) are pouch-type secondary batteries.

9. An energy storage system (50), comprising:
at least one battery pack (10) as defined in claim 1.

## Patentansprüche

1. Batteriepack (10), umfassend:
eine Mehrzahl von Batteriemodulen (100), welche aufeinander gestapelt sind, wobei jedes Batteriemodul (100) wenigstens eine Batteriezelle (110) aufweist;
eine positive Elektroden-Sammelschiene (130);
eine negative Elektroden-Sammelschiene (150); und
ein Kommunikation-Verbindungselement (170),
welche alle an denselben Seiten der Batteriemodule (100) bereitgestellt sind;
ein Steuermodul (200), welches zusammen mit der Mehrzahl von Batteriemodulen (100) gestapelt ist,
umfassend:
eine Steuereinheit (210) innerhalb des Steuermoduls (200);
eine positive Elektroden-Sammelschiene (230);
eine negative Elektroden-Sammelschiene (250);
ein Kommunikation-Verbindungselement (270); und
eine Verbindungsmodul-Verbindungseinheit (280),
welche alle an denselben Seiten des Steuermoduls (200) und der Batteriemodule (100) bereitgestellt sind, und
ein Verbindungsmodul (300), welches dazu eingerichtet ist, das Steuermodul (200) und die Mehrzahl von Batteriemodulen (100) elektrisch zu verbinden, und integral an der Mehrzahl von Batteriemodulen (100) und dem Steuermodul (200) montiert ist, umfassend:
eine positive Elektroden-Sammelschienen-Verbindungseinheit (310),
eine negative Elektroden-Sammelschienen-Verbindungseinheit (330),
eine Kommunikation-Verbindungselement-Verbindungseinheit (350),
eine serielle Verbindungsmodul-Verbindungseinheit (380), und
eine parallele Verbindungsmodul-Verbindungseinheit (385),
wobei der Batteriepack (10) in der Form eines Moduls hergestellt ist, in welchem die Mehrzahl von Batteriemodulen (100) und das Verbindungsmodul (300) in eine bestimmte Einheit standardisiert sind, indem das integrierte Verbindungsmodul (300) verwendet wird.

2. Batteriepack (10) nach Anspruch 1,
wobei das Steuermodul (200) als ein serielles Verbindungsmodul zum Verbinden der Mehrzahl von Batteriemodulen (100) in Reihe oder als ein paralleles Verbindungsmodul zum parallelen Verbinden der Mehrzahl von Batteriemodulen (100) bereitgestellt ist.

3. Batteriepack (10) nach Anspruch 2,
wobei die serielle Verbindungsmodul-Verbindungseinheit (380) zum Verbinden mit dem seriellen Verbindungsmodul eingerichtet ist; und
die parallele Verbindungsmodul-Verbindungseinheit (385) zum Verbinden mit dem parallelen Verbindungsmodul eingerichtet ist.

4. Batteriepack (10) nach Anspruch 3,
wobei die serielle Verbindungsmodul-Verbindungseinheit (380) und die parallele Verbindungsmodul-Verbindungseinheit (385) mit unterschiedlichen Formen bereitgestellt sind, um eine fehlerhafte Montage zu verhindern, wenn sie mit dem Steuermodul (200) gemäß dem seriellen Verbindungsmodul oder dem parallelen Verbindungsmodul verbunden werden.

5. Batteriepack (10) nach Anspruch 1,
wobei das Verbindungsmodul (300) ein Sicherungselement (390) umfasst, welches dazu eingerichtet ist, einen Überstrom zu blockieren, so dass die Mehrzahl von Batteriemodulen (100) geschützt sind.

6. Batteriepack (10) nach Anspruch 1,
wobei die Mehrzahl von Batteriemodulen (100) ein Kommunikation-Verbindungselement (170) umfassen, welches an wenigstens einer Seite davon bereitgestellt ist, wobei das Kommunikation-Verbindungselement (170) dazu ausgelegt ist, eine Spannung des Batteriemoduls (100) zu messen und mit dem Batteriemodul (100) zu kommunizieren, und elektrisch mit dem Steuermodul (200) verbunden ist.

7. Batteriepack (10) nach Anspruch 6,
wobei die Kommunikation-Verbindungselement-Verbindungseinheit (350) mit dem Kommunikation-Verbindungselement (170) der Mehrzahl von Batteriemodulen (100) verbunden ist.

8. Batteriepack (10) nach Anspruch 1,
wobei eine Mehrzahl von Batteriezellen (110) bereitgestellt ist, und
die Mehrzahl von Batteriezellen (110) Sekundärbatterien vom Beuteltyp sind.

9. Energie-Speichersystem (50), umfassend:
wenigstens einen Batteriepack (10) wie in Anspruch 1 definiert.

## Revendications

1. Bloc batterie (10) comprenant :
une pluralité de modules de batterie (100) empilés les uns sur les autres, chaque module de batterie (100) ayant au moins une cellule de batterie (110) ;
une barre omnibus d'électrode positive (130) ;
une barre omnibus d'électrode négative (150) ; et
un connecteur de communication (170),
tous prévus au niveau des mêmes côtés des modules de batterie (100) ;
un module de commande (200) empilé conjointement avec la pluralité de modules de batterie (100), incluant
une unité de commande (210) à l'intérieur du module de commande (200) ;
une barre omnibus d'électrode positive (230) ;
une barre omnibus d'électrode négative (250) ;
un connecteur de communication (270) ; et
une unité de connexion de module de connexion (280),
tous prévus au niveau des mêmes côtés du module de commande (200) et des modules de batterie (100), et
un module de connexion (300) configuré pour connecter électriquement le module de commande (200) et la pluralité de modules de batterie (100) et monté d'un seul tenant sur la pluralité de modules de batterie (100) et le module de commande (200), incluant
une unité de connexion de barre omnibus d'électrode positive (310),
une unité de connexion de barre omnibus d'électrode négative (330),
une unité de connexion de connecteur de communication (350),
une unité de connexion de module de connexion en série (380), et
une unité de connexion de module de connexion en parallèle (385),
dans lequel le bloc batterie (10) est fabriqué sous la forme d'un module, dans lequel la pluralité de modules de batterie (100) et le module de connexion (300) sont standardisés dans une certaine unité par utilisation du module de connexion intégré (300).

2. Bloc batterie (10) selon la revendication 1,
dans lequel le module de commande (200) est prévu comme un module de connexion en série pour la connexion de la pluralité de modules de batterie (100) en série ou comme un module de connexion en parallèle pour la connexion de la pluralité de modules de batterie (100) en parallèle.

3. Bloc batterie (10) selon la revendication 2,
dans lequel l'unité de connexion de module de connexion en série (380) est configurée pour la connexion avec le module de connexion en série ; et
l'unité de connexion du module de connexion en parallèle (385) est configurée pour la connexion avec le module de connexion en parallèle.

4. Bloc batterie (10) selon la revendication 3,
dans lequel l'unité de connexion de module de connexion en série (380) et l'unité de connexion de module de connexion en parallèle (385) sont dotées de différentes formes afin d'empêcher un assemblage erroné lors de la connexion avec le module de commande (200) selon le module de connexion en série ou le module de connexion en parallèle.

5. Bloc batterie (10) selon la revendication 1,
dans lequel le module de connexion (300) inclut un élément fusible (390) configuré pour bloquer une surtension de sorte que la pluralité de modules de batterie (100) soit protégée.

6. Bloc batterie (10) selon la revendication 1,
dans lequel la pluralité de modules de batterie (100) inclut un connecteur de communication (170) prévu sur au moins un côté de ceux-ci, le connecteur de communication (170) étant conçu pour mesurer une tension du module de batterie (100) et pour communiquer avec le module de batterie (100) et étant électriquement relié au module de commande (200).

7. Bloc batterie (10) selon la revendication 6,
dans lequel l'unité de connexion de connecteur de communication (350) est reliée au connecteur de communication (170) de la pluralité de modules de batterie (100).

8. Bloc batterie (10) selon la revendication 1,
dans lequel une pluralité de cellules de batterie (110) est prévue, et
la pluralité de cellules de batterie (110) est constituée par des batteries secondaires de type poche.

9. Système de stockage d'énergie (50) comprenant :
au moins un bloc batterie (10) selon la revendication 1.
